# EUROPEAN PATENT SPECIFICATION

(11) **EP 2 592 256 B1**
(45) Date of publication and mention of the grant of the patent: **05.06.2024**
(21) Application number: 12191863.5
(22) Date of filing: 08.11.2012
(51) Int. Cl.: F02D 41/20, F02D 41/34, F02D 41/40

(54) **FUEL INJECTION CONTROL DEVICE FOR AN INTERNAL COMBUSTION ENGINE**
VORRICHTUNG ZUR STEUERUNG DER KRAFTSTOFFEINSPRITZUNG FÜR EINEN VERBRENNUNGSMOTOR
DISPOSITIF DE CONTRÔLE D'INJECTION DE CARBURANT POUR UN MOTEUR À COMBUSTION INTERNE

(30) Priority: 08.11.2011 JP 2011244079
(43) Date of publication of application: 15.05.2013
(73) Proprietor: Hitachi Astemo, Ltd., Hitachinaka-shi, Ibaraki 312-8503 (JP)
(72) Inventor: Toyohara, Masahiro, Ibaraki, 312-0062 (JP); Fukuda, Takao, Ibaraki, 312-8503 (JP); Ide, Shogo, Ibaraki, 312-0062 (JP)
(74) Representative: MERH-IP Matias Erny Reichl Hoffmann Patentanwälte PartG mbB

(56) References cited:
- EP-A2- 2 105 599
- EP-A2- 2 365 201
- WO-A1-03/085246
- DE-A1- 19 752 638
- DE-A1- 19 813 138
- JP-A- 2002 013 430

## Description

### BACKGROUND OF THE INVENTION

### 1. Field of the Invention

The present invention relates to a fuel injection control device for an internal combustion engine.

### 2. Description of the Related Art

Internal combustion engines are equipped with a fuel injection control device that computes an appropriate fuel injection quantity according to the particular operational state of the engine and drives injectors for supplying a fuel. The injectors each open or close a valve constituting the injector, by utilizing the magnetic force generated by a built-in coil energized with an electric current allowing the injector to open the valve and to retain this open state, and thus inject the amount of fuel appropriate for the particular opening duration of the valve. The quantity of fuel injected is determined primarily by a differential between the pressure of the fuel and the atmospheric pressure of the injector nozzle, and by the time during which the fuel is being injected with the valve maintained in the open state. To inject the appropriate quantity of fuel, therefore, there is a need to set up the appropriate valve-open state hold time according to the particular fuel pressure and to open/close the valve rapidly and accurately.

During the time period from the start of power distribution to the injector to that of actual valve opening, however, the start of the opening operation is retarded by a response delay due to a change in a driving voltage supplied to the injector. One of the causes of the change in a driving voltage is that the injectors in different cylinders may have been driven in overlapped timing by the execution of a plurality of fuel injection actions during one cycle.

Because of such possible overlapping between a plurality of injectors, there exists a traditionally known method for changing only the driving timing of a subsidiary injector without changing that of a main injector. This method, which allows for a change in valve-opening response delay due to a change in the driving voltage of an injector, is intended to prevent output timing of a driving pulse to a plurality of injectors from overlapping, and is described in JP-2001-207898-A.

In another method, it is known that when a decrease in battery power supply voltage arises from the operation of an air conditioner, power windows, or other electrical parts mounted on a vehicle, the number of fuel injection actions executed during one cycle is reduced or a time interval of the fuel injection actions executed a plurality of times is extended. This second method is described in JP-2002-206446-A.

JP 2002 013430 A, prevents that the capacitor voltage of a drive circuit which drives the fuel injection valve of each cylinder is insufficient during catalyst early warming-up control of a direct-injection engine (in process of post-injection execution).

WO 03/085246 A1 and DE 197 52 638 A1 are also interesting documents of the prior art.

### SUMMARY OF THE INVENTION

The method in JP-2001-207898-A, however, aims at preventing the plurality of injectors from overlapping in pulse width, and does not include monitoring a state of the high voltage required for the fuel injectors. This first method has therefore had a problem in that desired fuel injection quantity accuracy cannot be obtained in a system that uses the high voltage to drive the opening of the injectors. In addition, since the fuel injection timing is determined only by the pulse width of the main fuel injection executed, there is a problem in that even if fuel injection quantity accuracy satisfies a predetermined level requirement, no consideration is given to the execution of fuel injection in at least three split cycles, as well as to probable impacts upon combustion.

The method in JP-2002-206446-A, on the other hand, has a problem that since the change in supply voltage is unpredictable, desired fuel injection quantity accuracy cannot be obtained if the change in supply voltage follows the execution of fuel injection. In addition, the method in Patent Document 2 is a technique that requires detecting the supply voltage itself and conducting this detection rapidly. In short, this second method is a technique that requires using a rapid detector.

An object of the present invention is to provide and propose a fuel injection control device that allows for the above problems associated with fuel injection in an internal combustion engine, this device controlling a fuel injection quantity accurately, even if execution timing of injection requested towards injectors and a method of driving the injectors are computed and implemented, respectively, to suit a particular operational state of the engine.

The aforementioned object is solved by the invention according to the independent claim 1. Further preferred developments are described by the dependent claim.

In accordance with the present invention, fuel injection quantity accuracy is maintained or improved in any requested injection timing of the plurality of injectors, with no influence upon fuel performance.

### BRIEF DESCRIPTION OF THE DRAWINGS

Other objects and advantages of the invention will become apparent from the following description of embodiments with reference to the accompanying drawings in which:
Fig. 1 is a total configuration diagram of an internal combustion engine to which a fuel injection control device according to the present invention is applied;
Fig. 2 shows an example of a fuel injection control device configuration according to the present invention;
Fig. 3 shows an example of a driving circuit for an injector shown in Fig. 2;
Fig. 4 shows an example that represents a relationship between fuel injection pulse width, a profile of an injector driving current waveform, and internal opening/closing positions of an injector, in the present invention;
Fig. 5 shows another example that represents a relationship between pulse widths of fuel injection pulse signals, profiles of injector driving currents, and internal opening/closing positions of injectors, the example applying to a situation under which a plurality of injectors according to the present invention are adjacent to each other in driving timing;
Fig. 6 shows an example that represents injection flow characteristics obtained when the plurality of injectors according to the present invention are adjacent to each other in driving timing;
Fig. 7 shows an example that represents a relationship between characteristics of injectors and an air-fuel ratio in the present invention;
Fig. 8 shows yet another example that represents a relationship between pulse widths of fuel injection pulse signal, profiles of injector driving currents, and internal opening/closing positions of injectors, the example applying to a situation under which a plurality of injectors according to the present invention are driven at the same time;
Fig. 9 shows an example that represents timing charts relating to driving start timing of a plurality of injectors according to the present invention;
Fig. 10 shows an example of a restoration time of a high voltage according to the present invention;
Fig. 11 shows an example of fuel injection quantity correction control according to the present invention;
Fig. 12 shows an example of a block diagram of injector control according to the present invention;
Fig. 13 shows an example of a flowchart of injector control not covered by the present invention;
Fig. 14 shows another example of a flowchart of injector control not covered by the present invention;
Fig. 15 shows an example that represents fuel injection pulse width and high-voltage signal behavior in the present invention;
Fig. 16 shows an example that illustrates a method of switching injector control according to the present invention; and
Fig. 17 shows a flowchart of injector control according to the present invention.

### DESCRIPTION OF THE PREFERRED EMBODIMENT

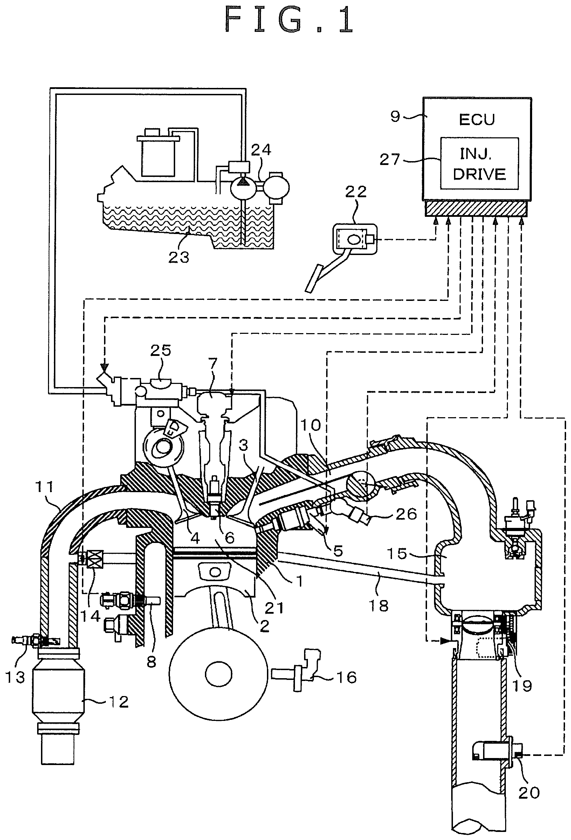

Hereunder, an internal combustion engine and fuel injection control device according to an embodiment of the present invention will be described using the accompanying drawings. Fig. 1 shows the internal combustion engine according to the present invention, and a basic configuration of the fuel injection control device applied to the engine. Referring to Fig. 1, the engine 1 includes a piston 2, an air suction valve 3, and an exhaust valve 4. Suction air flows through an air flowmeter (AFM) 20, then enters a throttle valve 19, and is supplied from a collector 15 that is a branch section, through an air suction pipe 10 and the suction valve 3, to a combustion chamber 21 of the engine 1. Fuel is supplied from a fuel tank 23 to the internal combustion engine by a low-pressure fuel pump 24, and then the fuel is boosted up to a necessary fuel injection pressure by a high-pressure fuel pump 25. The boosted fuel is injected from an injector 5 into the combustion chamber 21 of the engine 1 and ignited by an ignition coil 7 and an ignition plug 6. The pressure of the fuel is measured by a fuel pressure sensor 26. After-combustion gas emissions are discharged into an exhaust pipe 11 via the exhaust valve 4. The exhaust pipe 11 has a three-way catalyst 12 for cleaning the gas emissions. An engine control unit (ECU) 9 incorporates a fuel injection control device 27. A signal from a crank angle sensor 16 of the engine 1, an air quantity signal from the AFM 20, a signal from an oxygen sensor 13 for detecting an oxygen concentration in the gas emissions, an accelerator angle signal from an accelerator angle sensor 22, a signal from the fuel pressure sensor 26, and other signals are input to the fuel injection control device 27. The ECU 9 calculates a torque required for the engine from the signal of the accelerator angle sensor 22, the ECU 9 also discriminating an idling state of the engine. In addition to a speed detector for computing the engine speed from the signal of the crank angle sensor 16, the ECU 9 further has a warm-up discriminator to determine whether the three-way catalyst 12 is already warmed up, by acquiring information such as engine coolant temperature information from a coolant temperature sensor 8 and information on an elapsed time from a start of the engine. Furthermore, the ECU 9 calculates the quantity of suction air required for the engine 1, then outputs to the throttle valve 19 a valve opening signal appropriate for the suction air quantity, and activates the fuel injection control device 27 to calculate a fuel quantity commensurate with the suction air quantity, output a fuel injection signal to the injector 5, and output an ignition signal to the ignition plug 6.

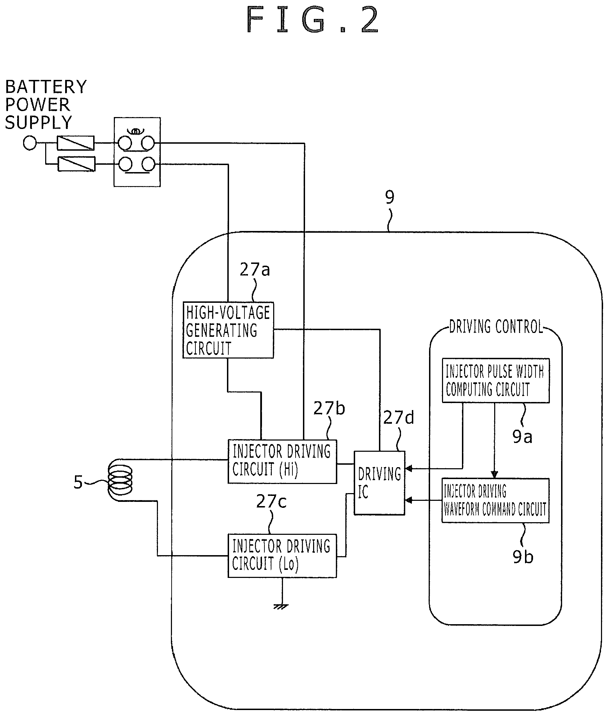

An example of a fuel injection control device configuration according to the present invention is shown in Fig. 2.

Referring to Fig. 2, a block 27a includes a high-voltage generating circuit that generates, from a supply voltage of the battery of the internal combustion engine, a high supply voltage required for injector opening. The high supply voltage is supplied to a driving circuit 27d, which then generates a desired supply voltage using a dedicated command for supply voltage generation. A block 27b includes an injector driving circuit that selects either the high supply voltage for opening the injector, or a low supply voltage that is the battery supply voltage, and supplies the selected supply voltage to an injector 5. When the injector 5 is to be switched from a closed state to an open state, the block 27b supplies the high supply voltage (e.g., 65 V), thereby supplying an injector-opening current required for opening the injector. When the open state of the injector is to be maintained, the block 27b switches the supply voltage to the battery voltage, thus supplying a hold current. A block 27c, as with the block 27b, includes a driving circuit that is provided downstream of the injector, for supplying a driving current to the injector. The blocks 27c, 27b, 27a are controlled to be driven by the driving circuit of the block 27d, to supply the desired driving supply voltage and driving current to the injector. A driving period (power distribution duration to the injector) of the block 27d and the driving supply voltage value and driving current value thereof are controlled by commands that have been calculated in blocks 9a and 9b.

In this way, the fuel injection control device optimizes the injector driving control quantity and fuel injection quantity required for combustion in the internal combustion engine.

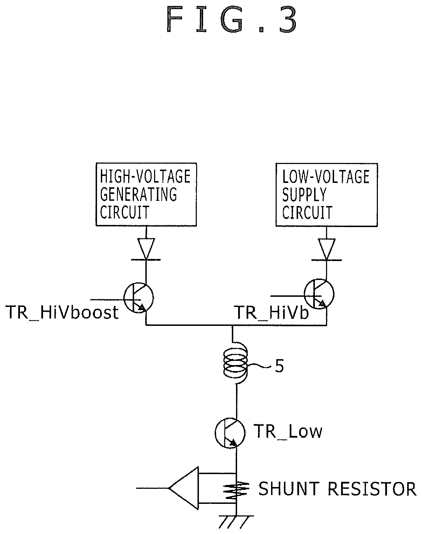

An example of a driving circuit for the injector shown in Fig. 2 is shown in Fig. 3.

As described in Fig. 2, upstream of the injector, a high voltage for supplying the valve-opening current needed to open the injector is supplied from the high-voltage generating circuit via a diode, which prevents a backflow of the current, to the injector 5 by use of a TR_HiVboost circuit shown in the figure. Meanwhile, after the injector has been driven to open, a low voltage for supplying the hold current needed to maintain the open state of the injector is supplied from a low-voltage power supply circuit via a diode for preventing a backflow of the hold current, to the injector 5 by use of a TR_HiVb circuit shown in the figure. Composition of the high-voltage generating circuit here can be that of a generally known DC-DC converter or the like. Detailed description of this composition is omitted herein since the composition itself has no direct relationship with the present invention. The low voltage can likewise be the battery supply voltage itself of the internal combustion engine, and detailed description of the low voltage is likewise omitted herein. Next, downstream of the injector 5, when a driving TR_Low circuit is activated, the voltage that has been supplied upstream above is supplied to the injector, from which the voltage is then further supplied to a shunt resistor provided further downstream of the injector. The shunt resistor detects the current flowing through the injector, and thus conducts the desired injector current control described later herein.

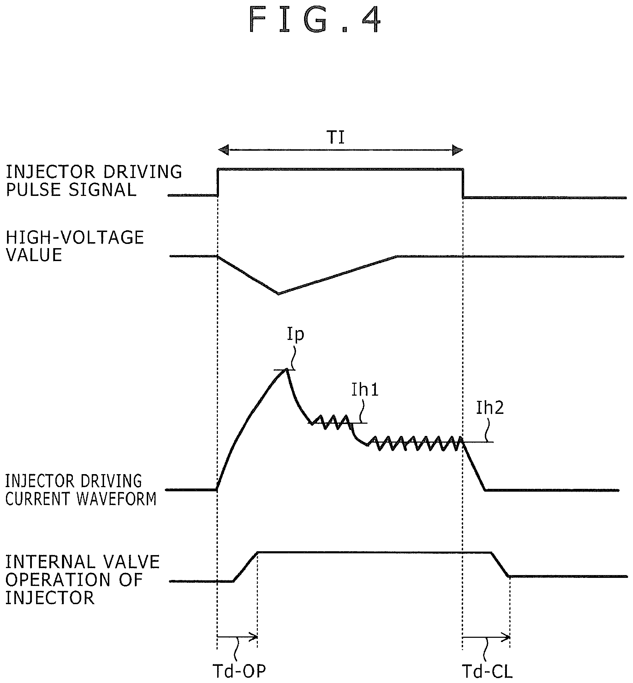

Fig. 4 shows an example that represents a relationship between fuel injection pulse width, a profile of an injector driving current waveform, and internal opening/closing positions of the injector, in the present invention.

Injector driving pulse signal TI shown in an upper section of Fig. 4 is a pulse signal based on the value which the block 9a in Fig. 2 has calculated.

Middle and lower sections of Fig. 4 represent the relationship between the fuel injection pulse signal TI, the driving current flowing through the injector shown in the injector driving circuit of Figs. 2 and 3, and the internal opening/closing positions of the injector; the lower section of Fig. 4 shows the profile of the injector driving current waveform.

After receiving the driving pulse signal TI, the driving IC 27d activates the driving circuits TR_Hivboost and TR_Low (both shown in Fig. 3) at the same time in synchronization with a rise of the pulse signal TI, and as shown in the middle section of Fig. 4, supplies a valve-opening peak current Ip required for rapid valve-opening of the injector. As shown in Fig. 3, the valve-opening current is supplied to the injector by the application of the high voltage from the high-voltage generating circuit. At this time, the high-voltage value shown in Fig. 4 decreases according to the amount of energy consumed as the valve-opening current for the injector, and after this decrease, the high-voltage generating circuit controls the high voltage to return to the desired value within a predetermined time.

Next, upon the current through the injector reaching the Ip level, the driving IC 27d deactivates the driving circuit TR_Hivboost. The valve-opening current Ip is 11 A, for example.

After the deactivation of the driving circuit TR_Hivboost following the arrival at the valve-opening current Ip, the current through the injector approaches a first target value Ih1 that is a level at which the current can maintain the injector in its open state. The driving IC 27d then activates the driving circuit TR_Hivb, thereby distributing the current from the low-voltage source to the injector. The driving circuit TR_Hivb is activated/deactivated to keep the current at the first target value Ih1, a level at which the valve-open state of the injector can be maintained. For example, the first target value Ih1 is 5 A. After the receipt of the TI signal, upon an elapse of a predetermined time, the driving circuit TR_Hivb is activated/deactivated to keep the current at a second target value Ih2, another level at which the valve-open state of the injector can be maintained. For example, the second target value Ih2 is 3 A. After that, at the same time that the driving pulse signal TI falls, the driving circuits TR_Hivboost, TR_Hivb, and TR_Low are all deactivated, whereby the supply of the current to the injector is stopped.

Timing in which the injector opens or closes depends on internal circuit operation of the fuel injection control device 27, a delay in a response of the current due to a harness leading to the injector 5, a magnetic force developed, and/or a delay in valve response. When the injector opens, the valve of the injector moves to its full-opening position after a response delay time Td_OP, and when the injector closes, the valve of the injector moves to its full-closing position after a response delay time Td_CL1.

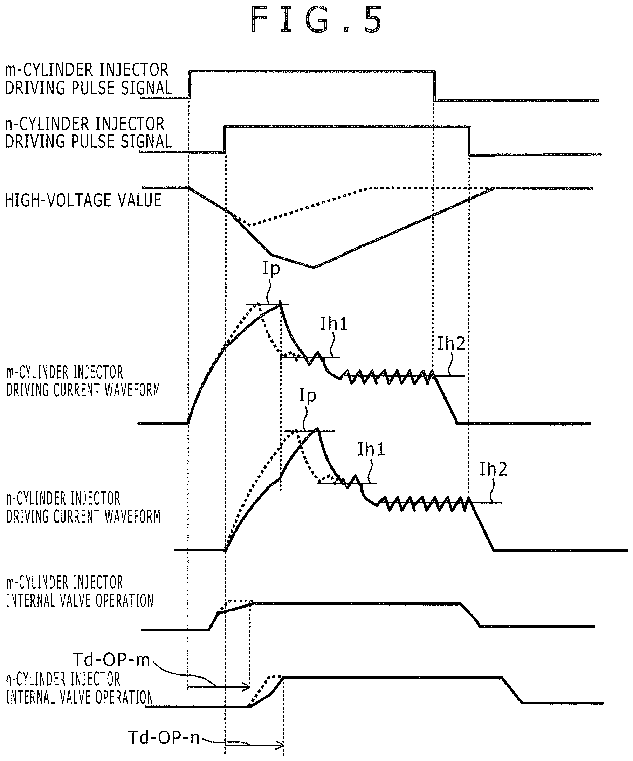

Fig. 5 shows another example that represents a relationship between pulse widths of fuel injection pulse signals, profiles of injector driving currents, and internal opening/closing positions of injectors, the example applying to a situation under which a plurality of injectors according to the present invention are adjacent to each other in driving timing.

Behaviors denoted by a dotted line in Fig. 5 represent basic characteristics relating to the injector driving current waveform profile and injector's internal opening/closing positions described in Fig. 4. In contrast to this, when fuel injection is repeated a plurality of times in one cylinder, control is conducted with the injectors of different cylinders being adjacent to each other in driving timing. This state is shown in Fig. 5. It is known that the control conducted when fuel injection is repeated the plurality of times in one cylinder is intended for purposes such as ensuring stable idling of the internal combustion engine, early activating the catalyst, and reducing the amount of soot, that is, particulate matter (PM) released from exhaust. Detailed description of the particular control is therefore omitted herein.

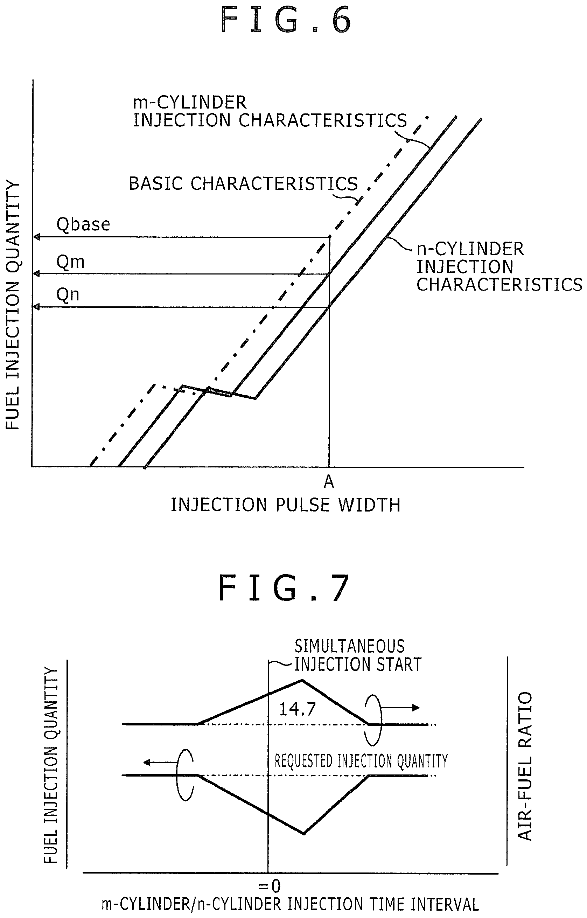

In a case, such as the above, that the injectors of a plurality of cylinders are adjacent to each other in driving timing, since the high voltage supplied from the high-voltage generating circuit and used to rapidly open the injector is consumed for driving the plurality of injectors, the supply voltage significantly decreases relative to that as used to drive one injector. Consequently, as shown in a middle section of Fig. 5, the valve-opening current for the injectors of an "m" number of cylinders (hereinafter, referred to simply as the m-cylinders) in which the injection is started earlier than in an "n" number of cylinders (hereinafter, referred to simply as the n-cylinders) becomes gentle in growth rate, upon a start of driving of the n-cylinders, and the current behaves differently from the way it does during independent driving of one injector, denoted by a dotted line. The same also applies to a behavior of the valve-opening current for the n-cylinders' injectors that are driven late behind the m-cylinders' injectors. More specifically, while the injectors of the n-cylinders are overlapping those of the m-cylinders in terms of high-voltage driving period, and during a period from the overlapping to an arrival of the current at its peak level Ip, the high voltage decreases and thus makes the current behave differently from the way it does during the independent driving of one injector, denoted by a dotted line. As a result, a response delay time Td_OP of the m- and n-cylinders' injectors that is shown in a lower section of Fig. 5 delays behind (i.e., becomes longer than) the time described in Fig. 4. The response delay time Td_OP differs according to a degree of the injectors' adjacency in terms of injection timing. The adjacency will be described in detail using Fig. 7.

Fig. 6 shows an example that represents injection flow characteristics obtained when the plurality of injectors according to the present invention are adjacent to each other in driving timing.

A single-dotted line in Fig. 6 denotes the injection flow characteristics of one injector driven independently, unlike those of the plurality of injectors driven in adjacent timing as shown in Fig. 4. Solid lines denote the m-cylinder injection characteristics and n-cylinder injection characteristics that are the injection flow characteristics of the m-cylinder and n-cylinder injectors, obtained when the plurality of injectors are adjacent to each other in driving timing as shown in Fig. 5. As described above, the change in the valve-opening delay time Td_OP of the injector also changes the injection flow characteristics with respect to the injection pulse width. For example, at requested injection pulse width A (see Fig. 6) under a predetermined operational state of the internal combustion engine, a flow rate of the injected fuel takes a value of Qbase for the independent fuel injection characteristics, whereas those take values of Qm and Qn for the m-cylinder injection characteristics and n-cylinder injection characteristics, respectively. This means that the quantities of fuel injection in the latter case are smaller than the quantity of injection, Qbase, at the same injection pulse width. Since the valve-opening response of the injector differs, these fuel injection characteristics remain invariant in gradient (the gradient here represents a relationship of Δinjected-fuel flow rate/Δinjection pulse width), and basically shift in a direction of the injection pulse width, i.e., in a direction of a horizontal axis in Fig. 6.

Fig. 7 shows an example that represents a relationship between flow characteristics of injectors and an air-fuel ratio in the internal combustion engine, the relationship being obtained when the plurality of injectors according to the present invention are adjacent to each other in driving timing.

The diagrams that represent the relationships in which, as shown in Figs. 5 and 6, the differences in driving timing between a plurality of injectors affect the injection flow characteristics thereof, are described in further detail below using Fig. 7. The "Simultaneous injection start" that is shown centrally in the figure denotes a position at which the injectors of a plurality of different cylinders have been driven in the same timing. As described above, the injected-fuel flow rate shown in a lower section of the figure changes with an injection starting time interval of the plurality of cylinders (m-cylinders and n-cylinders), that is plotted on a horizontal axis. The injection flow curve in Fig. 7 indicates that the flow rate of the injected fuel tends to decrease more as the curve goes farther to the right of the position indicating the simultaneous injection timing. This tendency is due to the fact that after the injector of one cylinder has been driven earlier to start the injection of the fuel and the high voltage has decreased to the predetermined value, the driving of another injector is started with a delay, the start of which then further reduces the high voltage and hence the injection flow characteristics of the following injector. This tendency is represented by the relationship between the fuel injection flow rate and injection pulse width of each injector, shown in Fig. 6. The air-fuel ratio shown in an upper section of Fig. 7 denotes an air-fuel ratio characteristic of the internal combustion engine, based on the injected-fuel flow characteristics. In this way, the injected-fuel flow characteristics vary air-fuel ratio control accuracy of the internal combustion engine according to the particular relationship in injection timing position between the injectors in the plurality of cylinders, thus affecting gas emission and engine operability.

For these reasons, fuel injection correction control for stabilized control of fuel injection requires changing the relationship in the relative position of the fuel injection driving start timing between a plurality of cylinders, and using the value that differs between the injector driven earlier and the injector driven later. Briefly, very complex control is required.

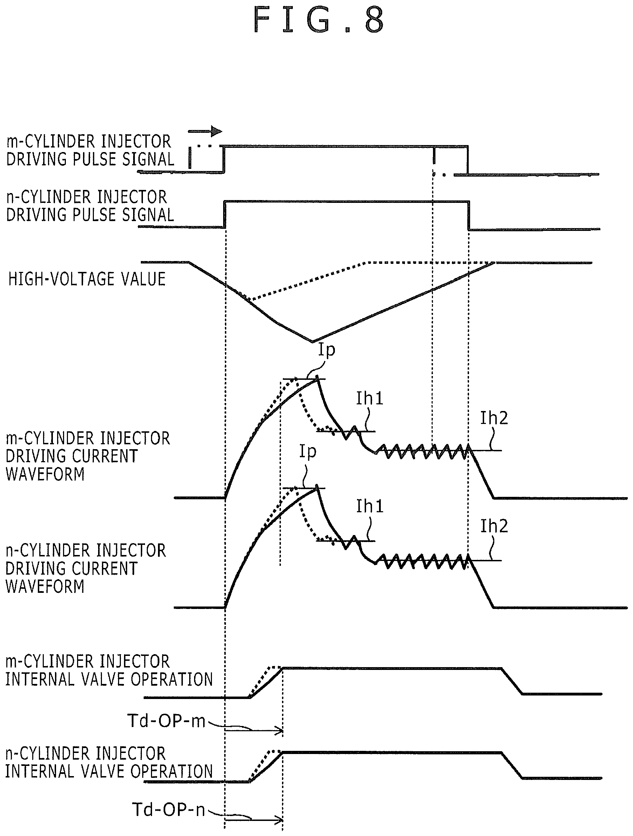

Fig. 8 shows yet another example that represents a relationship between fuel injection pulse widths, profiles of injector driving currents, and internal opening/closing positions of injectors, the example applying to a situation under which a plurality of injectors according to the present invention are driven at the same time.

A total composition of Fig. 8 is the same as that of Fig. 5, and description of the factors that constitute Fig. 8 is therefore omitted herein.

As shown in Fig. 8, when the injectors in a plurality of cylinders are driven at the same time, there is no need to conduct the complex fuel-injection quantity correction control that as shown in Fig. 7, requires correcting the relationship in the relative position of the fuel injection driving start timing between a plurality of cylinders, and also correcting the data that differs between the injector driven earlier and the injector driven later. Therefore, when a fuel injection driving timing request is made so that the relative positions of a plurality of cylinders in terms of the start timing of fuel injection driving will be adjacent within a predetermined data range (the predetermined data range here means a range in which the injected-fuel flow characteristics shown in Fig. 7 change), the requested fuel injection driving timing can be changed to match to other adjacent start timing of fuel injection driving. An upper section of Fig. 8 that is shown with an arrow and a dotted line denotes that change. Executing simultaneous injection in this way enables fuel injection quantity correction control to be achieved in a simplified way without requiring the above complex fuel-injection quantity correction control. In addition, although it is described in Fig. 8 for convenience sake that the injector to inject the fuel earlier is driven in the same timing as that of the injector to inject the fuel later, the above change means changing the fuel injection driving timing only of one injector adjacent in terms of fuel injection timing, this injector being that of the cylinder which is more robust against combustion in the internal combustion engine. For example, if the timing of the fuel injection in an air intake stroke and the timing of the fuel injection in a compression stroke are adjacent between different cylinders, the fuel injection timing of the injector to inject the fuel into the cylinder in its intake stroke can be changed to conduct the control so that the fuel injection from this injector synchronizes with that of the injector for the cylinder in the compression stroke.

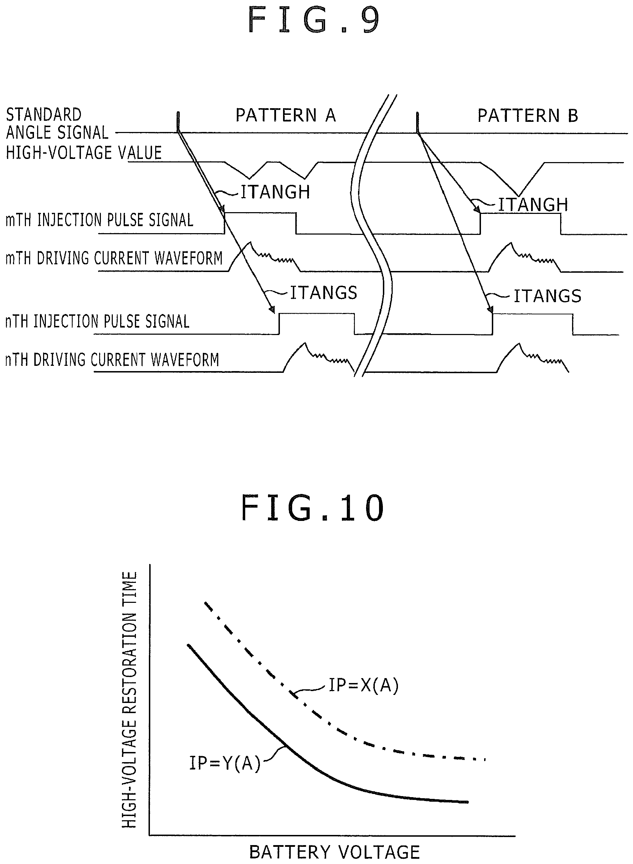

Fig. 9 shows an example that represents timing charts relating to simultaneous driving timing of a plurality of injectors according to the present invention.

Of two patterns shown in Fig. 9, pattern A at a left side relates to a case in which the plurality of injectors are relatively distant from each other in the start timing of fuel injection driving. Pattern B at a right side in Fig. 9 relates to a case in which the fuel injection driving of the injectors is started at the same time under a situation that the requested fuel injection driving timing is adjacent between the injectors. Whether the fuel injection timing is adjacent between the injectors of a plurality of cylinders can be discriminated by comparing ITANGH and ITANGS, which are angles from those standard angle positions for fuel injection timing control that are shown in Fig. 9. For example, the discrimination can be conducted using a value obtained by time-converting an angle value derived from an |ITANGH-ITANGS| calculation for an absolute value between both angles. A factor involved when the high voltage from the high-voltage generating circuit is restored to a desired value is determined by time, not an angle of the internal combustion engine. The time-conversion therefore allows accurate discrimination. Alternatively, the method of time-converting the relative angle of the fuel injection driving timing can be a generally known method (angle = constant value × internal combustion engine speed × time) or by calculation with a table.

Correcting the injector-driving timing in this manner using the time-converted value of |ITANGH-ITANGS| allows stabilized fuel-injection quantity control to be realized without using complex fuel-injection quantity correction control. (The fuel-injection quantity correction control method according to the present invention will be described later herein.)

Fig. 10 shows an example of a restoration time of the high voltage generated by the high-voltage generating circuit as a voltage required for the valve-opening of the injectors according to the present invention.

Fig. 10 is a relational diagram of the time required for the high-voltage generating circuit to restore the high supply voltage that has decreased as a result of electrical energy being consumed during injector driving, to the desired high-voltage value (say, 65 V). The restoration time differs according to the battery supply voltage required for the generation of the high voltage, and the valve-opening current Ip given by the injector which consumes the high voltage. The high-voltage restoration time exhibits a tendency to become longer as the battery voltage lowers or the valve-opening current Ip increases. Therefore, the time required for the high-voltage generating circuit to restore the high voltage shown in Fig. 9, to the desired high-voltage value, can be calculated using either at least one of the battery voltage and the valve-opening current Ip given by the injector which consumes the high voltage, or both of the two parameters.

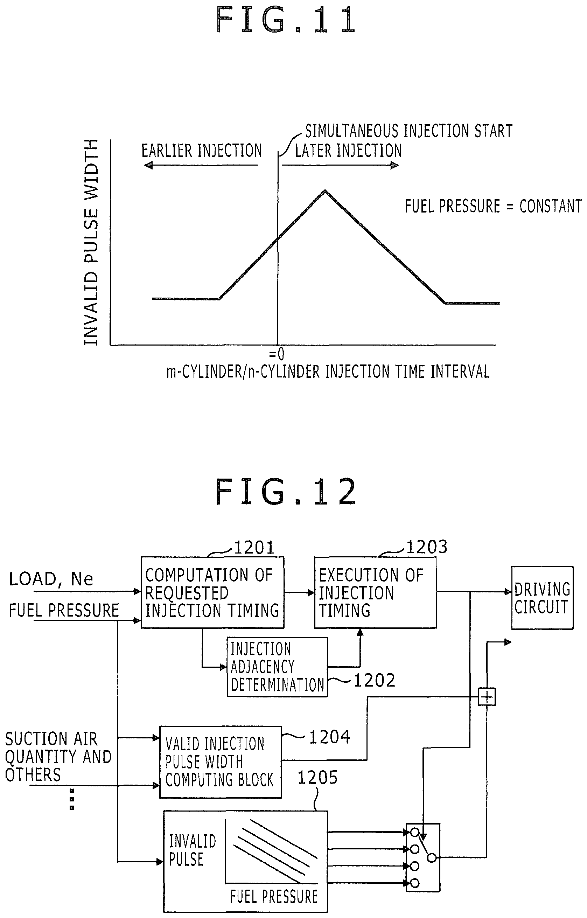

Fig. 11 shows an example of fuel injection quantity correction control according to the present invention.

As shown in Fig. 7, the fact that the flow rate of the fuel injected varies with the multi-injector driving timing indicates that the valve-opening response time of the injector changes. Hence, accuracy of the fuel injection quantity correction control based on the injector pulse width can be improved by correcting invalid pulse width observed during the injector control (it is known that the method of controlling the injector here is by calculating the invalid pulse width in terms of valid pulse width + invalid pulse width, and further description of the invalid pulse width is therefore omitted herein). Fig. 11 shows correction characteristics of the invalid pulse width that assume a predetermined fuel pressure. For these reasons, both of the relationship in the relative position of the fuel injection driving start timing between the plurality of cylinders, and the quantity of fuel injection correction require correction with the value that differs between the injector driven earlier and the injector driven later, so the very complex fuel-injection quantity correction control described above is required. As shown in Fig. 8, however, controlling the fuel injector driving timing of the plurality of cylinders at the same time allows this timing to be limited to the simultaneous injection starting point shown in the figure, and thereby, simple and accurate fuel injection quantity control to be implemented. While the fuel pressure in the internal combustion engine has been conveniently shown as a constant pressure in Fig. 11, conducting the fuel injection quantity correction appropriately according to the fuel pressure of the engine allows accurate fuel injection quantity control, even under a different fuel pressure state matching the particular operational state of the engine.

Fig. 12 shows an example of a block diagram of injector control according to the present invention.

Block 1201 calculates the fuel injection timing requirement (the ITANGH and ITANGS angles) matching the operational state of the internal combustion engine, the fuel pressure in the engine, and/or other parameters. Block 1202 determines whether the driving timing shown in Fig. 9 is adjacent between the injectors of the plurality of cylinders. If the driving timing is determined to be adjacent, block 1203 corrects the driving timing corresponding to the cylinder which is more robust against combustion, and controls the injector driving operation regarding the injector driving timing as the same of the different cylinder (i.e., ITANGH=ITANGS).

Next, block 1204 computes the valid pulse width of each injector from the operational state of the internal combustion engine, the fuel pressure in the engine, and/or other parameters. Block 1205 computes the invalid pulse width of the injector from the adjacent-timing information that was obtained in block 1202, then selects the computed invalid pulse width, and after adding the valid pulse width that was calculated in block 1204 to the invalid pulse width, outputs the invalid pulse width and the added valid pulse width in combined form. In this way, if the driving timing is adjacent between the injectors of the plurality of cylinders and the fuel injection quantity characteristic changes, accurate injector control can be achieved by simplifying the control circuit composition.

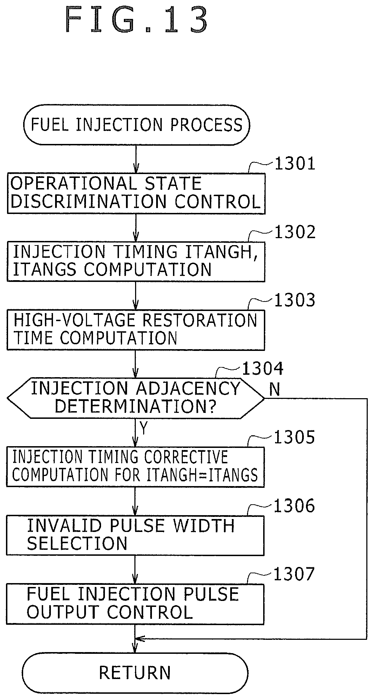

Fig. 13 shows an example of a flowchart of injector control not covered by the present invention.

Block 1301 determines the operational state of the internal combustion engine, and block 1302 calculates the injector-driving timing angle ITANGH, ITANGS from the operational state of the engine. Block 1303 calculates the restoration time of the injector-driving high voltage shown in Fig. 10. Block 1304 uses the high-voltage restoration time calculation results in block 1303 to determine whether the driving timing is adjacent between the injectors of the plurality of cylinders. If the driving timing is determined to be adjacent, block 1305 corrects the driving timing to match between the different injectors. At this time, the injector that is more robust against combustion (i.e., the injector whose value is to be changed from requested injection data) is corrected for simultaneous injection. Alternatively the requested injection value of both injectors may be calculated/corrected at predetermined rates each (for simultaneous injection, the value may be corrected appropriately according to the combustion state of the internal combustion engine, by for example calculating an intermediate value of the calculated ITANGH and ITANGS angle requirements).

Next, block 1306 calculates the invalid pulse widths of the injectors that are required for simultaneous fuel injection, as shown in Figs. 11 and 12, and selects the calculated values. Block 1307 outputs the fuel injection pulse based on both of the fuel injection driving timing that was corrected by block 1304, and the invalid pulse width that was calculated by block 1306. Correction control is thus executed.

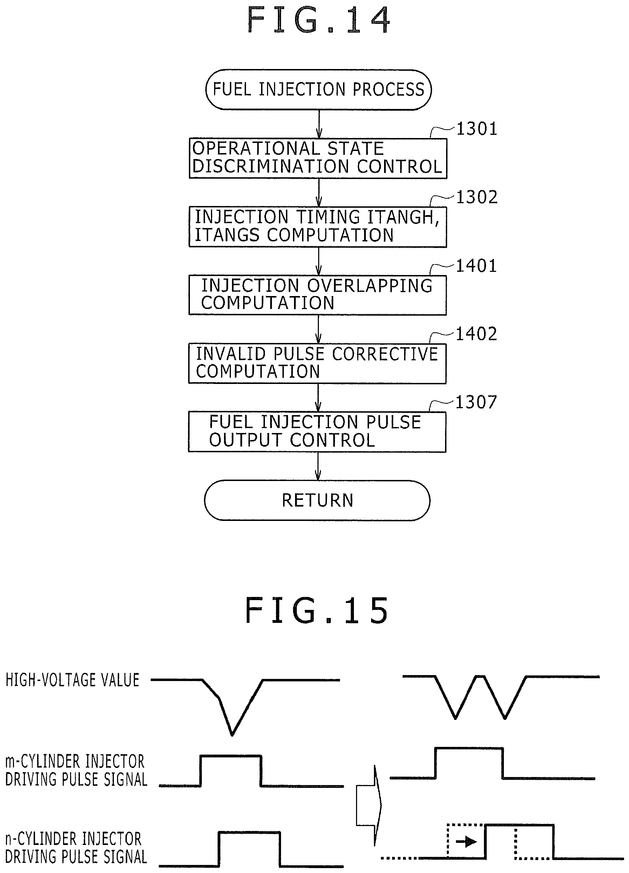

Fig. 14 shows another example of a flowchart of injector control not covered by the present invention.

This flowchart shows a control method effective for improving a situation in which the combustion in the internal combustion engine departs from a robustness range, by changing the fuel injection driving timing using the method shown in Fig. 13 not covered by the present invention. This flowchart shows details of the control process flow that was described in Fig. 7 as requiring complex control.

Description of blocks 1301 and 1302 is omitted herein since both are the same as those shown in Fig. 13. Block 1401 calculates an overlapping time of the period during which the high voltage for opening the injector is consumed in a plurality of different cylinders. Block 1402 calculates, on a cylinder-by-cylinder basis, the invalid pulse width of the injector driven earlier in the fuel injection driving timing for the different cylinders that is adjacent to the overlapping time, and the invalid pulse width of the injector driven later. The correction of these invalid pulse widths is as shown in Fig. 11. Next, block 1307 adds each of the different invalid pulse widths correction value calculated for each injector by block 1402, to the valid pulse width of the injector. Block 1307 also outputs the injector pulse width data and provides injection control.

In this way, accurate fuel injection quantity control is implemented, even if the change to the injection driving timing cannot be conducted in accordance with the request for the combustion in the internal combustion engine.

One method of controlling the fuel injection quantity accurately in the case that the requested injection driving starting timing is adjacent between different cylinders has been described above. This fuel-injection quantity control involves correcting the start timing of fuel injection driving and the invalid pulse width of the injector in accordance with the high-voltage value for opening the injector. The following describes another method of accurate fuel injection quantity control that does not require correcting the invalid pulse width of the injector, even when the requested injection driving starting timing is adjacent between different cylinders.

Fig. 15 shows an example that represents fuel injection pulse width and high-voltage signal behavior for opening injectors in the present invention.

A left side of Fig. 15 shows injector-driving pulse signal states and high-voltage changes in simplified form in the case that as described in detail in Fig. 5, the requested fuel injection driving start timing is adjacent between different cylinders. The fact that these changes lead to changes in the fuel injection flow characteristics of each injector has also been described above. Even in this case, fuel can be injected without a change in the fuel injection flow characteristics of the injector, by as shown at a right side of Fig. 15, providing the high-voltage restoration time interval in the driving timing differing between the injectors. The restoration time interval of the high voltage is as shown in Fig. 10, and to ensure an interval equivalent to the restoration time, the timing in which the driving of the injector is to be started is corrected through a time interval indicated by an arrow, with respect to the requested fuel injection driving start timing shown with a dotted line in the figure. At this time, the injector that is more combustion-robust (i.e., the injector whose data is to be changed from requested injection data) is corrected as shown in Fig. 13. Alternatively, the interval equivalent to the restoration time may be obtained by calculating/correcting the requested injection data of both injectors at the predetermined respective rates (the value may be corrected appropriately according to the combustion state of the internal combustion engine, by for example, multiplying or adding/subtracting the calculated ITANGH and ITANGS angle requirements at the predetermined rates).

Referring here to the driving of the injectors in different cylinders, it is necessary only to obtain the restoration time interval of the high voltage. Even if the injector-driving pulse signals of the different cylinders are overlapping, there is no problem, provided that the restoration time interval of the high voltage is obtained. The reason for that is that since the injector-driving currents Ih1 and Ih2 are supplied from the battery of a relatively large capacity, the driving currents Ih1, Ih2 can be sufficiently applied even under the overlapping state of the injector-driving pulse signals. Injector-driving timing correction based on the injector-driving pulse signals is therefore unnecessary.

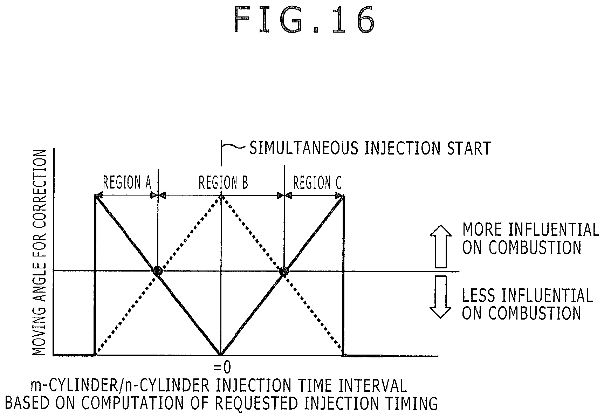

Fig. 16 shows an example that illustrates a method of switching injector control in the case that the fuel injection driving timing is adjacent between the plurality of cylinders in the present invention.

A solid line in Fig. 16 denotes how the fuel injection-driving timing correction value required for the simultaneous fuel injection shown in Fig. 13 varies when the fuel injection driving timing is adjacent between the plurality of cylinders. Fuel injection driving timing correction becomes necessary from within a range overlapping the restoration time of the high voltage, the fuel injection driving timing correction becomes a maximum, and at an angle position where the injectors are driven at the same time, the amount of correction becomes 0.

Depending on whether the fuel injection driving timing correction is conducted upon the cylinder whose injector is to be driven earlier to inject the fuel, or the cylinder whose injector is to be driven later, the amount of fuel injection driving timing correction becomes line-symmetric about a central position at which the simultaneous injection start shown in the figure is achieved as the requested fuel-injection driving timing. If this fuel-injection driving timing correction affects the combustion in the internal combustion engine, regions A, B, C shown in the figure represent a degree of the influence. In region B, the fuel-injection driving timing correction does not affect the combustion in the engine since the amount of correction is small, and in regions A, C, the fuel-injection driving timing correction significantly affects the engine combustion since the amount of correction is large.

A dotted line in Fig. 16, on the other hand, denotes how the correction of the fuel injection driving timing in Fig. 15 (i.e., avoidance of the high-voltage restoration time) changes the amount of correction. This change in the amount of correction, unlike that shown with a solid line in the figure, becomes a maximum from within the range overlapping the restoration time of the high voltage, at the angle position where the injectors are driven at the same time, and the amount of fuel injection driving timing correction becomes line-symmetric similarly to the above.

For these reasons, in the case that the fuel-injection driving timing correction affects the combustion in the internal combustion engine, stabilized engine combustion can be realized by selecting the correction method shown with a solid line in Fig. 13, and the correction method shown with a dotted line in Fig. 15.

Even when the requested fuel-injection driving timing is corrected and changed using either of the above two methods, the corresponding control method is employed unless the correction affects the combustion state of the internal combustion engine.

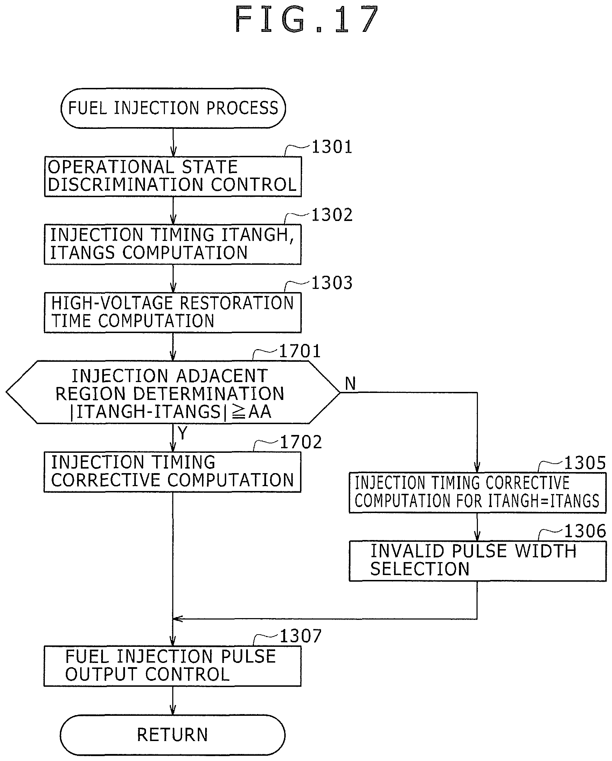

Fig. 17 shows a flowchart of injector control according to the present invention.

Blocks 1301 to 1307 are as shown in Fig. 13, and description of these blocks is herein omitted to avoid overlapping of the description. Block 1701 determines whether a difference in requested fuel-injection driving timing between a plurality of cylinders is within predetermined data range AA. If the predetermined data range is determined to be overstepped, block 1702 changes the fuel injection driving timing different between the injectors, in accordance with the high-voltage restoration time calculated in block 1303, the change being conducted to ensure the time required for the high voltage to return to the predetermined value. Details of the changing method are as described in Fig. 15. The control method shown in Fig. 13 is conducted if, in block 1701, the difference in requested fuel-injection driving timing between the cylinders is determined to be within predetermined data range AA.

The fuel injection control methods according to the present invention have been described above. In the invention, when the requested injector-driving timing different between cylinders is determined by the operational state of the internal combustion engine and then the injector is driven in the determined timing, the fuel injection quantity is controlled accurately and as a result, degradation of engine emissions and operability is avoided by stabilized air-fuel ratio control of the engine.

## Claims

1. A fuel injection control device (27) for an internal combustion engine (1), comprising:
a high-voltage generating circuit (27a) for generating a high voltage exceeding a battery voltage which is a voltage for driving an injector (5) injecting fuel into a cylinder of the internal combustion engine (1), the battery voltage and the high voltage being used to supply a hold current (Ih), as well as a valve-opening current (Ip) as a driving current, to the injector (5),
wherein the fuel injection control device (27) is configured
to output a fuel injection pulse signal to the injector (5) in a plurality of fuel injection timings during one cycle of combustion, and
to calculate a restoration time required for the high-voltage generating circuit (27a) to restore the high voltage to a predetermined value, after the high voltage is consumed by the driving of the injector (5) and decreases, and
when the injection of fuel by any other injector (5) into another cylinder of the internal combustion engine is demanded during the calculated restoration time, to check whether a difference between the demanded fuel injection timing of the injector (5) and the demanded fuel injection timing of the other injector (5) is within a predetermined data range (AA) or not and to identify the injector between both injectors, where the fuel injection has less influence upon the combustion in the internal combustion engine (1), wherein,
if said difference is within a predetermined data range (AA), the fuel injection control device (27) is further configured to correct the start of the fuel injection timing of the identified injector so as to execute fuel injection by the injector (5) and the other injector (5) into the cylinder and the other cylinder simultaneously, while adapting the injection duration of the injector (5) and the other injector (5) for compensating the simultaneous injection, and wherein
if said difference is outside the predetermined data range (AA),
the fuel injection control device (27) is further configured to correct the start of the fuel injection timing of the identified injector (5), so that the calculated restoration time is provided between the fuel injection timings of the injector (5) and the other injector (5).

2. The fuel injection control device (27) according to claim 1, wherein a circuit for calculating the restoration time of the high voltage conducts the calculation based upon either at least one of the battery voltage and the valve-opening current (Ip) for the injector (5), or both thereof.

## Patentansprüche

1. Kraftstoffeinspritzsteuervorrichtung (27) für einen Verbrennungsmotor (1), umfassend:
eine Hochspannungserzeugungsschaltung (27a) zum Erzeugen einer Hochspannung, die eine Batteriespannung überschreitet, die eine Spannung zum Antreiben einer Einspritzvorrichtung (5) ist, die Kraftstoff in einen Zylinder des Verbrennungsmotors (1) einspritzt, wobei die Batteriespannung und die Hochspannung verwendet werden, um der Einspritzvorrichtung (5) einen Haltestrom (Ih) sowie einen Ventilöffnungsstrom (Ip) als einen Antriebsstrom zuzuführen,
wobei die Kraftstoffeinspritzsteuervorrichtung (27) konfiguriert ist,
ein Kraftstoffeinspritzimpulssignal an die Einspritzvorrichtung (5) in einer Mehrzahl von Kraftstoffeinspritzzeitpunkten während eines Verbrennungszyklus auszugeben, und
eine Wiederherstellungszeit zu berechnen, die für die Hochspannungserzeugungsschaltung (27a) erforderlich ist, um die Hochspannung auf einen vorbestimmten Wert wiederherzustellen, nachdem die Hochspannung durch das Antreiben der Einspritzvorrichtung (5) verbraucht wurde und abnimmt, und
wenn die Einspritzung von Kraftstoff durch eine beliebige andere Einspritzvorrichtung (5) in einen anderen Zylinder des Verbrennungsmotors während der berechneten Wiederherstellungszeit angefordert wird, zu prüfen, ob eine Differenz zwischen dem angeforderten Kraftstoffeinspritzzeitpunkt der Einspritzvorrichtung (5) und dem angeforderten Kraftstoffeinspritzzeitpunkt der anderen Einspritzvorrichtung (5) innerhalb eines vorbestimmten Datenbereichs (AA) liegt oder nicht, und die Einspritzvorrichtung zwischen beiden Einspritzvorrichtungen zu identifizieren, wo die Kraftstoffeinspritzung weniger Einfluss auf die Verbrennung im Verbrennungsmotor (1) hat, wobei
die Kraftstoffeinspritzsteuervorrichtung (27) ferner konfiguriert ist, den Beginn des Kraftstoffeinspritzzeitpunkts der identifizierten Einspritzvorrichtung zu korrigieren, um die Kraftstoffeinspritzung durch die Einspritzvorrichtung (5) und die andere Einspritzvorrichtung (5) in den Zylinder und den anderen Zylinder gleichzeitig auszuführen, während die Einspritzdauer der Einspritzvorrichtung (5) und der anderen Einspritzvorrichtung (5) zum Kompensieren der gleichzeitigen Einspritzung angepasst wird, und wobei
die Differenz außerhalb des vorbestimmten Datenbereichs (AA) liegt,
die Kraftstoffeinspritzsteuervorrichtung (27) ferner konfiguriert ist, den Beginn des Kraftstoffeinspritzzeitpunkts der identifizierten Einspritzvorrichtung (5) zu korrigieren, so dass die berechnete Wiederherstellungszeit zwischen den Kraftstoffeinspritzzeitpunkten der Einspritzvorrichtung (5) und der anderen Einspritzvorrichtung (5) bereitgestellt wird.

2. Kraftstoffeinspritzsteuervorrichtung (27) nach Anspruch 1, wobei eine Schaltung zum Berechnen der Wiederherstellungszeit der Hochspannung die Berechnung basierend auf entweder mindestens einem von der Batteriespannung und dem Ventilöffnungsstrom (Ip) für die Einspritzvorrichtung (5) oder beiden davon durchführt.

## Revendications

1. Dispositif de commande d'injection de carburant (27) pour un moteur à combustion interne (1), comprenant :
un circuit de génération de haute tension (27a) pour générer une haute tension dépassant une tension de batterie qui est une tension pour entraîner un injecteur (5) injectant du carburant dans un cylindre du moteur à combustion interne (1), la tension de batterie et la haute tension étant utilisées pour fournir un courant de maintien (Ih), ainsi qu'un courant d'ouverture de soupape (Ip) en tant que courant d'entraînement, à l'injecteur (5),
dans lequel le dispositif de commande d'injection de carburant (27) est configuré
pour délivrer un signal d'impulsion d'injection de carburant à l'injecteur (5) dans une pluralité de calages d'injection de carburant pendant un cycle de combustion, et
pour calculer un temps de restauration requis pour que le circuit de génération de haute tension (27a) restaure la haute tension à une valeur prédéterminée, après que la haute tension est consommée par l'entraînement de l'injecteur (5) et diminue, et
lorsque l'injection de carburant par un quelconque autre injecteur (5) dans un autre cylindre du moteur à combustion interne est demandée pendant le temps de restauration calculé, pour vérifier si une différence entre le calage d'injection de carburant demandé de l'injecteur (5) et le calage d'injection de carburant demandé de l'autre injecteur (5) est dans une plage de données prédéterminée (AA) ou non et pour identifier l'injecteur entre les deux injecteurs, où l'injection de carburant a moins d'influence sur la combustion dans le moteur à combustion interne (1), dans lequel,
ladite différence est dans une plage de données prédéterminée (AA), le dispositif de commande d'injection de carburant (27) est en outre configuré pour corriger le début du calage d'injection de carburant de l'injecteur identifié de manière à exécuter une injection de carburant par l'injecteur (5) et l'autre injecteur (5) dans le cylindre et l'autre cylindre simultanément, tout en adaptant la durée d'injection de l'injecteur (5) et de l'autre injecteur (5) pour compenser l'injection simultanée, et dans lequel
ladite différence est en dehors de la plage de données prédéterminée (AA),
le dispositif de commande d'injection de carburant (27) est en outre configuré pour corriger le début du calage d'injection de carburant de l'injecteur identifié (5), de sorte que le temps de restauration calculé est fourni entre les calages d'injection de carburant de l'injecteur (5) et de l'autre injecteur (5).

2. Dispositif de commande d'injection de carburant (27) selon la revendication 1, dans lequel un circuit pour calculer le temps de restauration de la haute tension effectue le calcul sur la base soit d'au moins l'un parmi la tension de batterie et le courant d'ouverture de soupape (Ip) pour l'injecteur (5), soit des deux de ceux-ci.
